# FASCICULE DE BREVET EUROPEEN

(11) **EP 3 381 803 B1**
(45) Date de publication et mention de la délivrance du brevet: **29.05.2019**
(21) Numéro de dépôt: 18155933.7
(22) Date de dépôt: 09.02.2018
(51) Int. Cl.: B64D 11/06, B60N 2/14, B64D 11/00

(54) **AERONEF PRESENTANT UN AMENAGEMENT PARTICULIER**
FLUGZEUG MIT EINEM BESTIMMTEN LAYOUT
AIRCRAFT WITH A PARTICULAR LAYOUT

(30) Priorité: 31.03.2017 FR 1752756
(43) Date de publication de la demande: 03.10.2018
(73) Titulaire: Airbus Interiors Services, 31000 Toulouse (FR); Airbus, 31700 Blagnac (FR)
(72) Inventeur: RIOS, Nicolas, 82170 BESSENS (FR); FERRERE, Nicolas, 82200 MOISSAC (FR); CHANTAL, Béranger, 31530 BRETX (FR); MARIAT, Sylvain, 31490 LEGUEVIN (FR)
(74) Mandataire: Gicquel, Olivier Yves Gérard

(56) Documents cités:
- GB-A- 2 362 095
- US-A- 5 024 398
- US-A1- 2014 373 759

## Description

La présente invention concerne un aéronef comportant un aménagement particulier qui présente deux positions dont l'une permet d'assurer la confidentialité entre deux passagers, et dont l'autre permet d'assurer la communication entre les deux passagers.

Dans certains aéronefs, l'aménagement intérieur permet d'assurer un meilleur confort des passagers en prévoyant la mise en place de sièges individuels de grand standing. En particulier, ces sièges assurent une certaine confidentialité du fait que leurs dossiers sont relativement hauts et ainsi un passager ne peut pas voir ce que fait le passager assis devant lui.

Bien que de tels sièges soient confortables et appréciés, il peut arriver qu'un passager et le passager qui est assis devant lui veulent s'entretenir l'un avec l'autre.

Mais de tels sièges ne sont pas prévus pour permettre une telle communication.

Différents types d'aménagements de cabines selon l'état de la technique sont connus des documents GB2362095A et US5024398A.

Un objet de la présente invention est de proposer un aéronef comportant un aménagement intérieur qui assure, d'une part, la confidentialité entre un passager et le passager assis devant lui, et, d'autre part, la possibilité de communiquer entre ces deux passagers.

A cet effet, est proposé un aéronef selon la revendication 1. Un tel aéronef comporte une cabine qui permet un premier aménagement assurant la confidentialité entre deux passagers assis l'un derrière l'autre, et un deuxième aménagement permettant la communication entre eux.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
la Fig. 1 est une vue de côté d'un aéronef selon l'invention,
les Figs. 2 et 3 sont des vues en perspective de l'aménagement de l'aéronef selon l'invention, dans deux positions différentes, et
la Fig. 4 est une vue en coupe d'une paroi de séparation.

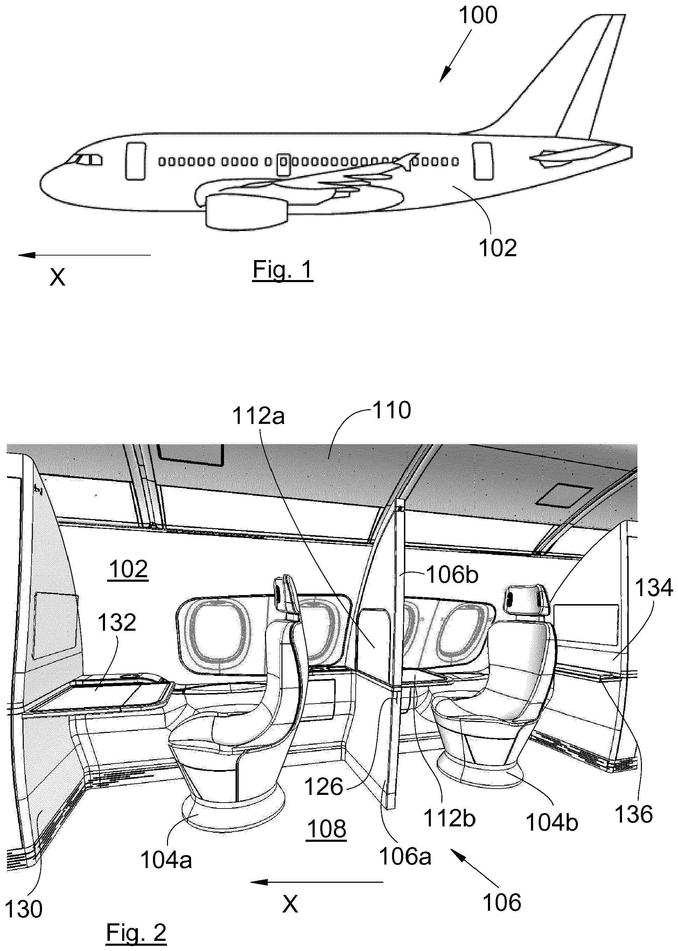

Dans la description qui suit, les termes relatifs à une position sont pris en référence à un aéronef en position normale d'utilisation, c'est-à-dire comme il est représenté sur la Fig. 1 avec son sens d'avancement normal (X) orienté vers la droite.

La Fig. 1 montre un aéronef 100 qui comporte une cabine 102 à l'intérieur de laquelle est installé un plancher (108) sur lequel sont fixés des sièges (104a-b).

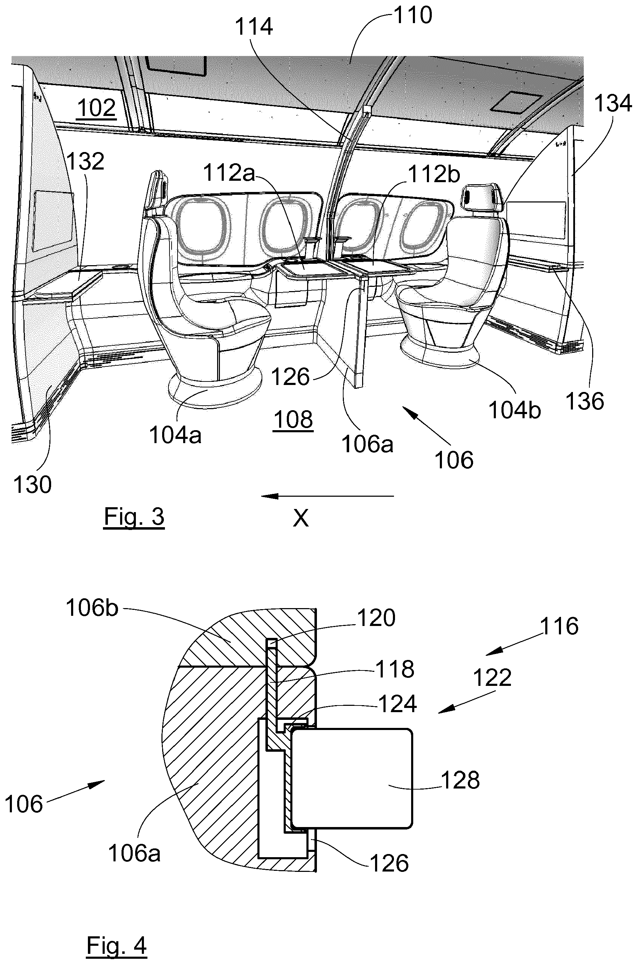

Les Figs. 2 et 3 montrent l'aménagement intérieur de l'aéronef 100. L'aéronef 100 comporte au moins deux sièges 104a-b qui sont installés l'un derrière l'autre par rapport au sens d'avancement (X) de l'aéronef 100. Le siège référencé 104b est le siège arrière et il est placé derrière le siège avant référencé 104a.

L'aéronef 100 présente une paroi de séparation 106 qui est disposée entre le siège avant 104a et le siège arrière 104b, perpendiculairement au plancher 108 et perpendiculairement au sens d'avancement X. Cette paroi de séparation 106 s'étend ici du plancher 108 au plafond 110 mais la hauteur pourrait être différente. La largeur de la paroi 106 est suffisante pour cacher un siège 104a-b à la vue de l'autre siège 104b-a tout en laissant libre une partie du plancher 108 afin de permettre la libre circulation des personnes dans l'aéronef 100.

La paroi de séparation 106 présente une partie basse 106a et une partie haute 106b. La partie basse 106a est fixe tandis que la partie haute 106b est amovible. La partie basse 106a est fixée en particulier au plancher 108 et à la paroi latérale de la cabine 102.

Afin d'assurer l'amovibilité de la partie haute 106b, la paroi 106 présente des moyens de fixation qui sont susceptibles de prendre une position de fixation dans laquelle la partie haute 106b est fixée à la partie basse 106a et une position libre dans laquelle la partie haute 106b est dissociable de la partie basse 106a permettant ainsi leur séparation.

La Fig. 2 montre l'aménagement intérieur de l'aéronef 100 dans une configuration dite de confidentialité correspondant à la position de fixation des moyens de fixation et de la paroi 106.

La Fig. 3 montre l'aménagement intérieur de l'aéronef 100 dans une configuration dite de communication correspondant à la position libre des moyens de fixation et de la paroi 106.

Pour permettre une meilleure intimité entre le passager du siège avant 104a et le passager du siège arrière 104b, le siège avant 104a est pivotant autour d'un axe perpendiculaire au plancher 108 sur un angle d'au moins 180°.

Ainsi, après pivotement du siège avant 104a et retrait de la partie haute 106b, les passagers peuvent librement communiquer.

Afin de permettre le dépôt d'objets ou de plateaux repas, la partie basse 106a porte pour chaque siège, une tablette 112a-b qui est montée mobile entre une position escamotée (Fig. 2 pour la tablette 112a) et une position d'utilisation (Fig. 3). En position escamotée, la tablette 112a-b est rangée verticalement, ici contre la partie haute 106b, et en position d'utilisation, la tablette 112a-b est disposée horizontalement devant le siège 104a-b correspondant.

Chaque tablette 112a-b est ici montée mobile en rotation sur la partie basse 106a autour d'un axe de rotation horizontal.

Pour éviter l'apparition d'une marche entre la partie basse 106a et les tablettes 112a-b en position d'utilisation, la face supérieure de chaque tablette 112a-b affleure le bord supérieur de la partie basse 106a, lorsque ladite tablette 112a-b est en position d'utilisation.

Pour assurer le maintien de la partie haute 106b sur la partie basse 106a, la paroi 106 comporte un premier élément d'emboîtement 114 solidaire de la partie basse 106a et fixé à la paroi latérale de la cabine 102 et s'étendant le long du bord vertical de la partie haute 106b qui est orientée vers ladite paroi latérale de la cabine 102. La partie haute 106b présente le long de ce bord vertical, un deuxième élément d'emboîtement solidaire dudit bord vertical et qui coopère avec le premier élément d'emboîtement 114 sous la forme d'un emboîtement entre le premier élément d'emboîtement 114 et le deuxième élément d'emboîtement.

Dans le mode de réalisation de l'invention présenté ici, le premier élément d'emboîtement 114 prend la forme d'une rainure et le deuxième élément d'emboîtement prend la forme d'une nervure qui s'emboîte dans la rainure. Mais il est possible de prévoir une disposition inverse.

La Fig. 4 montre une coupe par un plan vertical de la paroi 106 permettant de visualiser une partie des moyens de fixation.

Pour assurer le blocage de la partie haute 106b contre le premier élément d'emboîtement 114, la paroi 106 comporte un système de loquet 116.

Le système de loquet 116 comporte un loquet 118 monté à l'intérieur de la partie basse 106a, un trou 120 réalisé dans la partie haute 106b et prévu pour recevoir le loquet 118 et un actionneur 122 solidaire du loquet 118.

Le loquet 118 est mobile en translation verticalement entre une position de fixation (Fig. 4) dans laquelle le loquet 118 pénètre dans le trou 120 et une position libre dans laquelle le loquet 118 est hors du trou 120. En position de fixation, le loquet 118 bloque la partie haute 106b tandis qu'en position libre, le loquet 118 ne bloque pas la partie haute 106b qui peut être dissociée de la partie basse 106a.

L'actionneur 122 est manipulable depuis l'extérieur de la partie basse 106a et permet d'actionner le loquet 118 afin de la faire passer de la position de fixation à la position libre et inversement.

Dans le mode de réalisation de l'invention présenté ici, les moyens de fixation comprennent le premier élément d'emboîtement 114, le deuxième élément d'emboîtement et le système de loquet 116.

Pour assurer un meilleur maintien et faciliter la manoeuvre du loquet 118, le système de loquet 116 est placé du côté opposé à la paroi latérale de la cabine 102, c'est-à-dire ici du côté opposé au premier élément d'emboîtement 114.

Dans le mode de réalisation de l'invention présenté ici, l'actionneur 122 prend la forme d'un réceptacle 124 solidaire du loquet 118 et logé à l'intérieur de la partie basse 106a derrière une fente 126 que la tranche de la partie basse 106a présente. L'actionneur 122 présente également une carte 128, préférentiellement du type carte plastique, qui est prévue pour s'insérer dans le réceptacle 124 en traversant la fente 126. Après insertion de la carte 128 dans le réceptacle 124, un déplacement vers le haut, respectivement vers le bas, de la carte 128 déplace le réceptacle 124 vers le haut, respectivement vers le bas, et fait donc passer le loquet 118 en position de fixation, respectivement en position libre.

Il est également possible de prévoir que le siège arrière 104b est pivotant autour d'un axe perpendiculaire au plancher 108 sur un angle d'au moins 180° et il est possible de prévoir que l'aéronef 100 présente devant le siège avant 104a, une paroi amont 130 portant une tablette escamotable 132 et derrière le siège arrière 104b, une paroi aval 134 portant une tablette escamotable 136.

## Revendications

1. Aéronef (100) présentant un sens d'avancement (X) et comportant :
- une cabine (102) à l'intérieur de laquelle est installé un plancher (108),
- un siège avant (104a) et un siège arrière (104b) disposé derrière le siège avant (104a) par rapport au sens d'avancement, ledit siège avant (104a) étant pivotant autour d'un axe perpendiculaire au plancher (108), une paroi de séparation (106) étant disposée entre le siège avant (104a) et le siège arrière (104b), perpendiculairement au plancher (108) et perpendiculairement au sens d'avancement,
**caractérisé en ce que**
- le siège avant (104a) est pivotant autour d'un axe perpendiculaire au plancher (108) sur un angle d'au moins 180°,
- ladite paroi de séparation (106) présente une partie basse (106a) fixe et une partie haute (106b) amovible,
et **en ce que** l'aéronef comporte en outre des moyens de fixation susceptibles de prendre une position de fixation dans laquelle la partie haute (106b) est fixée à la partie basse (106a) et une position libre dans laquelle la partie haute (106b) est dissociable de la partie basse (106a).

2. Aéronef (100) selon la revendication 1, **caractérisé en ce que** la partie basse (106a) porte pour chaque siège, une tablette (112a-b) montée mobile entre une position escamotée dans laquelle la tablette (112a-b) est rangée verticalement et une position d'utilisation dans laquelle la tablette (112a-b) est disposée horizontalement.

3. Aéronef (100) selon la revendication 2, **caractérisé en ce qu'**en position d'utilisation, la face supérieure de chaque tablette (112a-b) affleure le bord supérieur de la partie basse (106a).

4. Aéronef (100) selon l'une des revendications 1 à 3, **caractérisé en ce que** les moyens de fixation comprennent :
- un premier élément d'emboîtement (114) solidaire d'une paroi latérale de la cabine (102) et s'étendant le long d'un bord vertical de la partie haute (106b) qui est orientée vers ladite paroi latérale,
- un deuxième élément d'emboîtement solidaire dudit bord vertical coopérant avec le premier élément d'emboîtement (114) sous forme d'un emboîtement entre le premier élément d'emboîtement (114) et le deuxième élément d'emboîtement,
- un système de loquet (116) comportant un loquet (118) monté à l'intérieur de la partie basse (106a), un trou (120) réalisé dans la partie haute (106b) et un actionneur (122) solidaire du loquet (118), l'actionneur (122) étant manipulable depuis l'extérieur de la partie basse (106a) pour faire passer le loquet (118) d'une position de fixation dans laquelle le loquet (118) pénètre dans le trou (120) et une position libre dans laquelle le loquet (118) est hors du trou (120) et inversement.

5. Aéronef (100) selon la revendication 4, **caractérisé en ce que** le système de loquet (116) est du côté opposé au premier élément d'emboîtement (114).

6. Aéronef (100) selon l'une des revendications 4 ou 5, **caractérisé en ce que** la partie basse (106a) présente une fente (126), **en ce que** l'actionneur (122) présente un réceptacle (124) solidaire du loquet (118) et logé à l'intérieur de la partie basse (106a) derrière ladite fente (126), et une carte (128) prévue pour s'insérer dans le réceptacle (124) en traversant la fente (126).

## Patentansprüche

1. Luftfahrzeug (100) mit einer Fortbewegungsrichtung (X) und das aufweist:
- eine Kabine (102), in deren Innerem ein Fußboden (108) eingebaut ist,
- einen vorderen Sitz (104a) und einen bezüglich der Fortbewegungsrichtung hinter dem vorderen Sitz (104a) angeordneten hinteren Sitz (104b), wobei der vordere Sitz (104a) um eine Achse lotrecht zum Fußboden (108) schwenkt, wobei eine Trennwand (106) zwischen dem vorderen Sitz (104a) und dem hinteren Sitz (104b) lotrecht zum Fußboden (108) und lotrecht zur Fortbewegungsrichtung angeordnet ist,
**dadurch gekennzeichnet, dass**
- der vordere Sitz (104a) über einen Winkel von mindestens 180° um eine Achse lotrecht zum Fußboden (108) schwenkt,
- die Trennwand (106) einen ortsfesten unteren Teil (106a) und einen entfernbaren oberen Teil (106b) hat,
und dass das Luftfahrzeug außerdem Befestigungseinrichtungen aufweist, die eine Befestigungsstellung, in der der obere Teil (106b) am unteren Teil (106a) befestigt ist, und eine freie Stellung einnehmen können, in der der obere Teil (106b) vom unteren Teil (106a) lösbar ist.

2. Luftfahrzeug (100) nach Anspruch 1, **dadurch gekennzeichnet, dass** der untere Teil (106a) für jeden Sitz eine Ablageplatte (112a-b) trägt, die zwischen einer eingeklappten Stellung, in der die Ablageplatte (112a-b) senkrecht verstaut ist, und einer Nutzungsstellung beweglich montiert ist, in der die Ablageplatte (112a-b) waagrecht angeordnet ist.

3. Luftfahrzeug (100) nach Anspruch 2, **dadurch gekennzeichnet, dass** in der Nutzungsstellung die Oberseite jeder Ablageplatte (112a-b) den oberen Rand des unteren Teils (106a) berührt.

4. Luftfahrzeug (100) nach einem der Ansprüche 1 bis 3, **dadurch gekennzeichnet, dass** die Befestigungseinrichtungen enthalten:
- ein erstes Einsteckelement (114), das fest mit einer Seitenwand der Kabine (102) verbunden ist und sich entlang eines senkrechten Rands des oberen Teils (106b) erstreckt, der zur Seitenwand ausgerichtet ist,
- ein fest mit dem senkrechten Rand verbundenes zweites Einsteckelement, das mit dem Einsteckelement (114) in Form einer Einsteckverbindung zwischen dem ersten Einsteckelement (114) und dem zweiten Einsteckelement zusammenwirkt,
- ein Klinkensystem (116), das eine im Inneren des unteren Teils (106a) montierte Klinke (118), ein im oberen Teil (106b) hergestelltes Loch (120) und ein fest mit der Klinke (118) verbundenes Stellglied (122) aufweist, wobei das Stellglied (122) von außerhalb des unteren Teils (106a) betätigbar ist, um die Klinke (118) von einer Befestigungsstellung, in der die Klinke (118) in das Loch (120) eindringt, in eine freie Stellung übergehen zu lassen, in der die Klinke (118) sich außerhalb des Lochs (120) befindet, und umgekehrt.

5. Luftfahrzeug (100) nach Anspruch 4, **dadurch gekennzeichnet, dass** das Klinkensystem (116) sich auf der dem ersten Einsteckelement (114) gegenüberliegenden Seite befindet.

6. Luftfahrzeug (100) nach einem der Ansprüche 4 oder 5, **dadurch gekennzeichnet, dass** der untere Teil (106a) einen Schlitz (126) aufweist, dass das Stellglied (122) einen Aufnahmebehälter (124), der fest mit der Klinke (118) verbunden und im Inneren des unteren Teils (106a) hinter dem Schlitz (126) untergebracht ist, und eine Karte (128) aufweist, die vorgesehen ist, um sich in den Aufnahmebehälter (124) einzufügen, indem sie den Schlitz (126) durchquert.

## Claims

1. Aircraft (100) having a direction of advance (X) and comprising:
- a cabin (102) within which is installed a floor (108),
- a front seat (104a) and a rear seat (104b) arranged behind the front seat (104a) with respect to the direction of advance, said front seat (104a) being able to pivot about an axis perpendicular to the floor (108), a partition wall (106) being arranged between the front seat (104a) and the rear seat (104b), perpendicular to the floor (108) and perpendicular to the direction of advance,
**characterized in that**
- the front seat (104a) is able to pivot about an axis perpendicular to the floor (108), through an angle of at least 180°,
- said partition wall (106) has a fixed lower portion (106a) and a removable upper portion (106b), and **in that** the aircraft further comprises securing means that are able to adopt a securing position in which the upper portion (106b) is secured to the lower portion (106a), and a release position in which the upper portion (106b) can be detached from the lower portion (106a).

2. Aircraft (100) according to Claim 1, **characterized in that** the lower portion (106a) has, for each seat, a tray table (112a-b) that is mounted so as to be able to move between a stowed position in which the tray table (112a-b) is stowed vertically and a use position in which the tray table (112a-b) is arranged horizontally.

3. Aircraft (100) according to Claim 2, **characterized in that**, in the use position, the upper face of each tray table (112a-b) is flush with the upper edge of the lower portion (106a).

4. Aircraft (100) according to one of Claims 1 to 3, **characterized in that** the securing means comprise:
- a first snug-fitting element (114) that is joined to a sidewall of the cabin (102) and extends along a vertical edge of the upper portion (106b) that is oriented towards said sidewall,
- a second snug-fitting element that is joined to said vertical edge engaging with the first snug-fitting element (114) in the form of a snug fit between the first snug-fitting element (114) and the second snug-fitting element,
- a latch system (116) comprising a latch (118) mounted within the lower portion (106a), a hole (120) created in the upper portion (106b) and an actuator (122) joined to the latch (118), wherein the actuator (122) can be manipulated from outside the lower portion (106a) to cause the latch (118) to pass from a securing position, in which the latch (118) enters the hole (120), and a free position, in which the latch (118) is outside the hole (120), and vice versa.

5. Aircraft (100) according to Claim 4, **characterized in that** the latch system (116) is on the opposite side from the first snug-fitting element (114).

6. Aircraft (100) according to either of Claims 4 and 5, **characterized in that** the lower portion (106a) has a slot (126), **in that** the actuator (122) has a recess (124) that is joined to the latch (118) and is housed inside the lower portion (106a) behind said slot (126), and a card (128) that is designed to be inserted into the recess (124), passing through the slot (126).
